# EUROPEAN PATENT APPLICATION

(11) **EP 4 537 993 A1**
(43) Date of publication of application: **16.04.2025**
(21) Application number: 24205225.6
(22) Date of filing: 08.10.2024
(51) Int. Cl.: B25J 5/00, B25J 9/00, B25J 15/00

(54) **LOAD HANDLING VEHICLE**

(30) Priority: 10.10.2023 IT 202300021024
(71) Applicant: G.D S.p.A., 40133 Bologna (IT)
(72) Inventor: TIRELLI, Emilio, 40133 BOLOGNA (IT); ORAZIO, Federico, 40133 BOLOGNA (IT); FABBRI, Gabriele, 40133 BOLOGNA (IT)
(74) Representative: Studio Torta S.p.A.

(57) **Abstract**

A vehicle (1) for load (L) handling, comprising: a base body (2); a propulsion system (7); a movable portion (9) mounted on the base body (2); a lifting system (11) which is configured to move the movable portion (9) along a lifting direction (W) transverse to the travel plane (XY); an articulated structure (14) mounted on the movable portion (9) and constrained to move along a plane (PM) of movement parallel to the travel plane (XY); a robotic arm (19) mounted on the base body (2) at a second proximal end (20) and connected or connectable to at least part of the articulated structure (14); the robotic arm (19) being configured, by moving the second distal end (21), to move a link element (17) of the articulated structure from a first position to a second position, which is different from the first position.

## Description

### CROSS-REFERENCE TO RELATED APPLICATIONS

This patent application claims priority from Italian patent application no. 102023000021024 filed on October 10, 2023, the entire disclosure of which is incorporated herein by reference.

### TECHNICAL FIELD

The present invention relates to a vehicle, preferably an automated guided vehicle (AGV) for load handling.

The present invention can be applied, advantageously but without limitation, in an automated warehouse vehicle, for example, for supplying incoming material to one or more automated machines for producing or packaging consumer goods, or for transporting components of the aforesaid machines during maintenance, format change or configuration change operations.

### BACKGROUND ART

Automated machines for producing or packaging consumer goods are known. Normally, these automated machines are supplied via handling means such as fork lift trucks or goods hoists, which lift large quantities of material, or in any case large loads, and allow the automated machines to be supplied with the materials required for processing, production and packaging consumer goods.

Normally, these handling means are, for example, vehicles equipped with forks or other vehicles having specific end attachments for handling, for example, reels (hence equipped with extendable spindles).

Therefore, an operator generally picks up the goods from a warehouse via the end attachment and moves it towards an intermediate warehouse or directly towards the automated machine that will use them. For loading and unloading operations of these goods, which are usually too heavy to be lifted manually by the operator, the latter requires to alight from the vehicle and move towards the rear part of the vehicle to monitor loading of the goods onto the end attachment, with consequent risks of injury or damage to the vehicle or to the goods that can be caused by lack of attention by the operator.

In other cases, such as when using fork lift trucks, the operator does not require to alight from the vehicle, but in order to pick up some loads correctly, must lean out of the fork lift truck to monitor insertion of specific forks into the respective housings for lifting of the goods, with consequent risks of injury or damage as mentioned above.

Automated vehicles are also known, although these can normally only be used for light loads (under 10 kg) and are restricted to certain architectures that only ever allow the same type of load to be picked up.

In particular, the aforesaid limit is mainly due to the fact that handling heavy loads would require structures that are very heavy (for example anthropomorphic robots of very large size) and particularly inconvenient to transport.

The patent documents EP2987761, EP3862144, US2021154866, and JPS5964239 describe vehicles for handling loads of known type, provided with the drawbacks illustrated above.

Therefore, there is the need to produce a vehicle capable of supporting large loads without excessive effort and which is also capable of lifting objects with very different features to one another.

### DESCRIPTION OF THE INVENTION

The object of the present invention is to provide a vehicle, preferably an automated guided vehicle (AGV) for load handling, which is at least partly devoid of the drawbacks described above and which is, at the same time, simple and inexpensive to produce.

In accordance with the present invention, there is provided a vehicle, preferably an automated guided vehicle (AGV) for load handling according to the appended claims.

The claims describe preferred embodiments of the present invention forming an integral part of the present description.

### BRIEF DESCRIPTION OF THE DRAWINGS

The present invention will now be described with reference to the accompanying drawings, which illustrate some examples of non-limiting embodiments thereof, wherein:
- Figs. 1 and 2 are respectively perspective and schematic views from above of a vehicle in accordance with an embodiment of the present invention in a first configuration;
- Fig. 3 is a perspective and schematic view from below of the vehicle of Figs. 1 and 2;
- Figs. 4 and 5 are respectively perspective and schematic views from above of the vehicle of Figs. 1 and 2 in a second configuration;
- Fig. 6 is a plan view of the vehicle of Figs. 4 and 5;
- Fig. 7 is a plan view of the vehicle of Figs. 1 and 2
- Fig. 8 is a perspective and schematic view in which the vehicle of the previous figures is visible in a third configuration, in particular for lifting a load.

### PREFERRED EMBODIMENTS OF THE INVENTION

With reference to the accompanying figures, a vehicle for load L handling is indicated generically con 1.

The same reference numbers and letters in the figures identify the same elements or components with the same function.

Within the scope of the present description, the term "second" component does not imply the presence of a "first" component. These terms are in fact used as labels to improve clarity and must not be understood as limiting.

The elements and the features illustrated in the different preferred embodiments, including the drawings, can be combined with one another without however departing from the scope of protection of the present application as described below.

It is specified that in the continuation of the present description, expressions such as "upper", "lower", "in front", "behind" and the like are used with reference to the conditions of normal travel of the road vehicle 1 along the normal forward travel direction D.

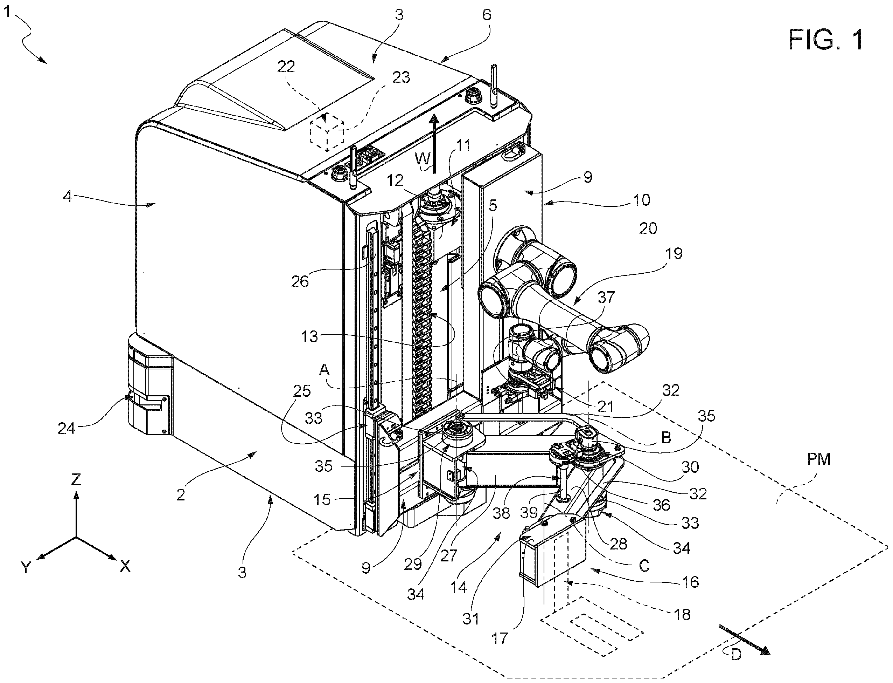

As illustrated in the non-limiting embodiment of Fig. 1, it is also possible to define:
- a longitudinal axis X, integral with the vehicle 1 and arranged, in use, horizontal and parallel to a normal travel direction D of the vehicle 1;
- a transverse axis Y, integral with the vehicle 1 and arranged, in use, horizontal and orthogonal to the axis X; and
- a vertical axis Z, integral with the vehicle 1 and arranged, in use, vertical and orthogonal to the axes X, Y.

According to the non-limiting embodiments of the accompanying figures, the vehicle 1 comprises a base body 2, preferably parallelepiped shaped, i.e., substantially comprising two opposite bases 3, one of which is lower facing the ground, and a lateral surface 4 that joins the two opposite bases 3 to each other. Naturally, the base 3 opposite the lower base is not strictly necessary and can be replaced by a cover or other forms that close the lateral surface 4.

In particular, the base body 2 defines the load-bearing structure (i.e., comprises a frame) of the load handling vehicle 1.

Preferably, the base body 2 comprises an inner structure 5, and an outer casing 6 that surrounds the inner structure 5, separating it from the environment in which the vehicle 1 operates so as to protect it and protect any operators from its moving parts.

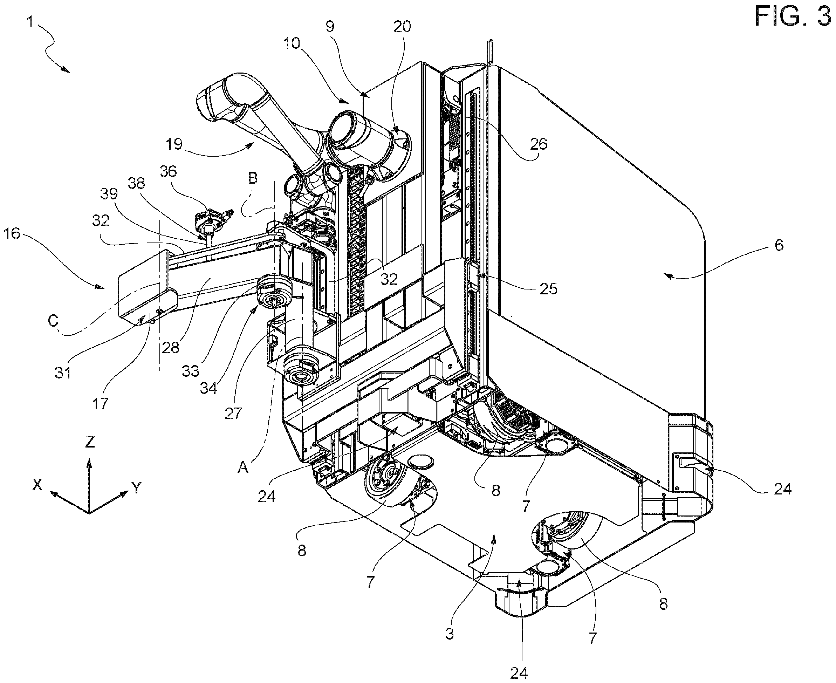

As illustrated in the non-limiting embodiment of Fig. 3, the vehicle 1 further comprises a propulsion system 7 mounted on (in particular inside the structure 5, but so as to protrude below the base 3 facing the ground) the base body 2 and which is configured to move the base body 2 on a travel plane.

Preferably, but without limitation, the propulsion system 7 comprises a plurality of wheels 8.

In some non-limiting cases, the propulsion system 7 is omnidirectional.

Preferably, the propulsion system 7 comprises three or more wheels 8, at least one of which does not rotate about a respective axis of rotation parallel to those of the other wheels 8.

In the non-limiting embodiment of Fig. 3, the vehicle 1 comprises precisely three wheels 8, each of which has an axis of rotation perpendicular to those of the other two wheels 8 and parallel to the ground.

In other embodiments, not illustrated, the propulsion system 7 can be any system of known type, even not omnidirectional, for example with steered wheels 8.

The vehicle 1 further comprises a movable portion 9 mounted on the base body 2. In particular, the movable portion 9 is mounted at a front face 10 of the lateral surface 4.

The vehicle 1 further comprises a lifting system 11 comprising at least one actuator device 12, which is configured to move the movable portion 9 along a lifting direction W transverse to the travel plane XY. In other words, the lifting direction W is substantially vertical and parallel to the axis Z.

Preferably, but without limitation, the actuator device 12 comprises a rotary or linear electric motor. In the case of a rotary motor, the device 12 further comprises a transmission system of known type, such as a worm screw, chain 13, rack and pinion, etc.

Advantageously, the vehicle 1 further comprises an articulated structure 14 mounted on the movable portion 9 and constrained to move along a plane PM of movement parallel to the travel plane XY. Therefore, in particular, the articulated structure 14 has at least two degrees of freedom, in particular for a horizontal movement to reach the load L. A further degree of freedom is then added by the fact that it is mounted on the movable portion 9 along the axis W. Consequently, the working space of the articulated structure 14 is in any case three-dimensional due to the possibility of passing from one plane PM of movement to the other by moving the portion 9 along the axis W.

In particular, the articulated structure comprises a first proximal end 15 at the base body 2 (mounted integral with the movable portion 9) and constrained thereto and a first distal end 16, which in turn comprises a link element 17, which is in turn configured to be linked, either directly (i.e., without interpositions, if it already comprises mechanical coupling elements) or via a working tool 18 (of known type and not further described, such as forks, a magnetic coupling, a force fit or the like), to a load L to be handled/processed.

Advantageously, moreover, the vehicle 1 comprises a robotic arm 19 mounted on the base body 2 at a respective second proximal end 20, in particular also mounted on the movable portion 9. In particular, the robotic arm 19 is connected or connectable to at least part of the articulated structure 14 at a respective second distal end 21.

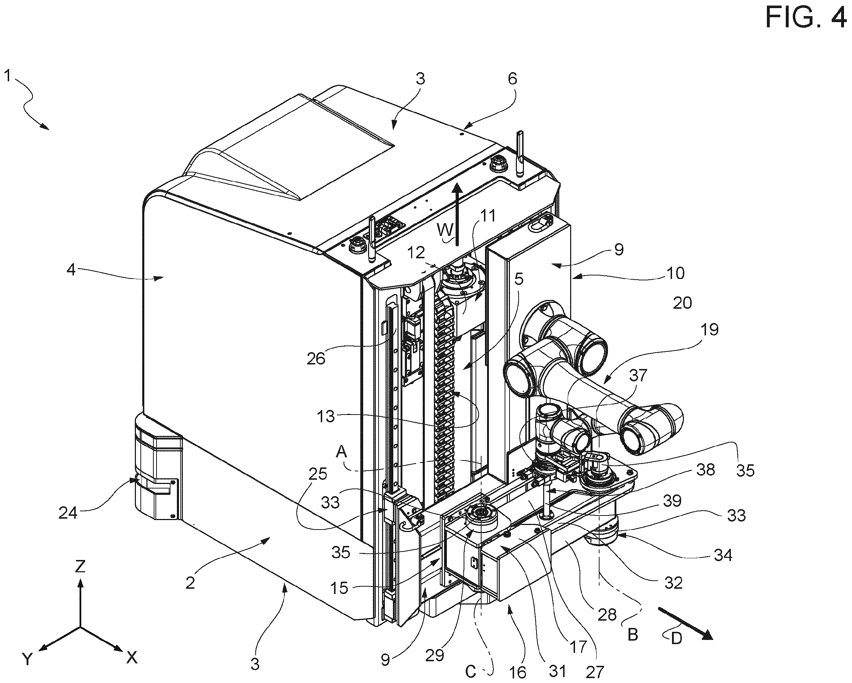

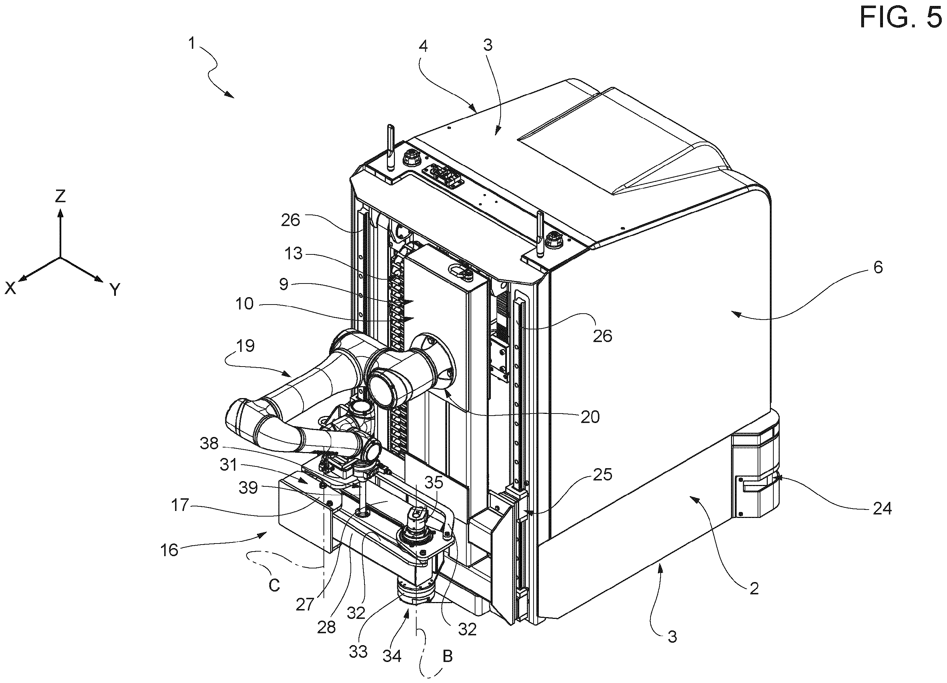

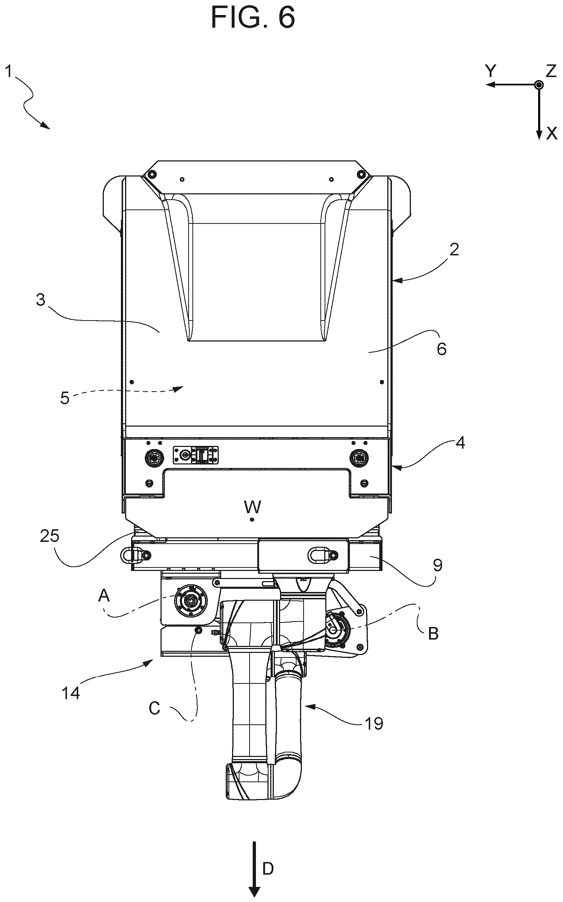

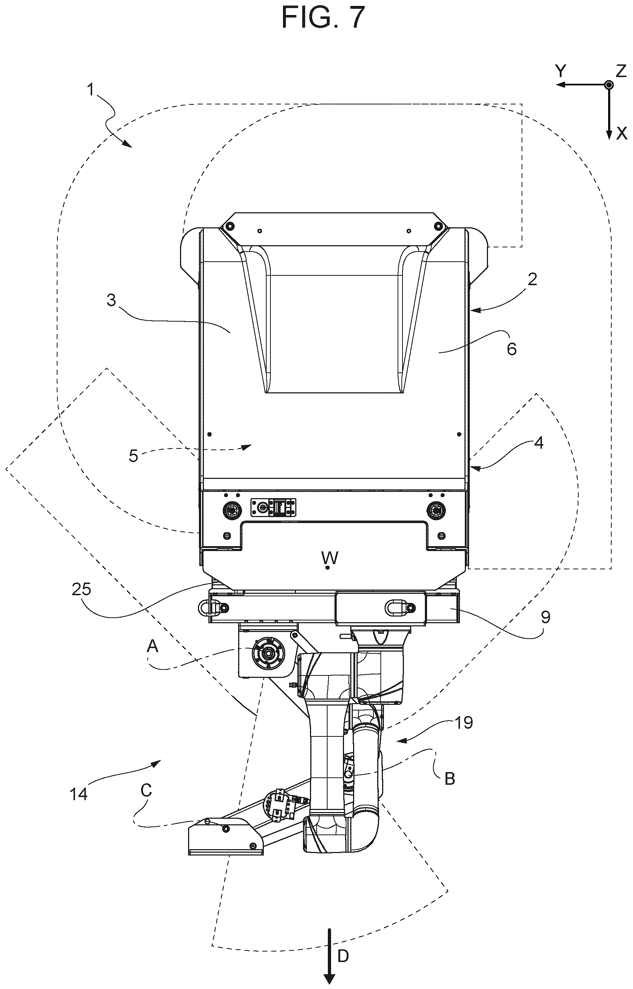

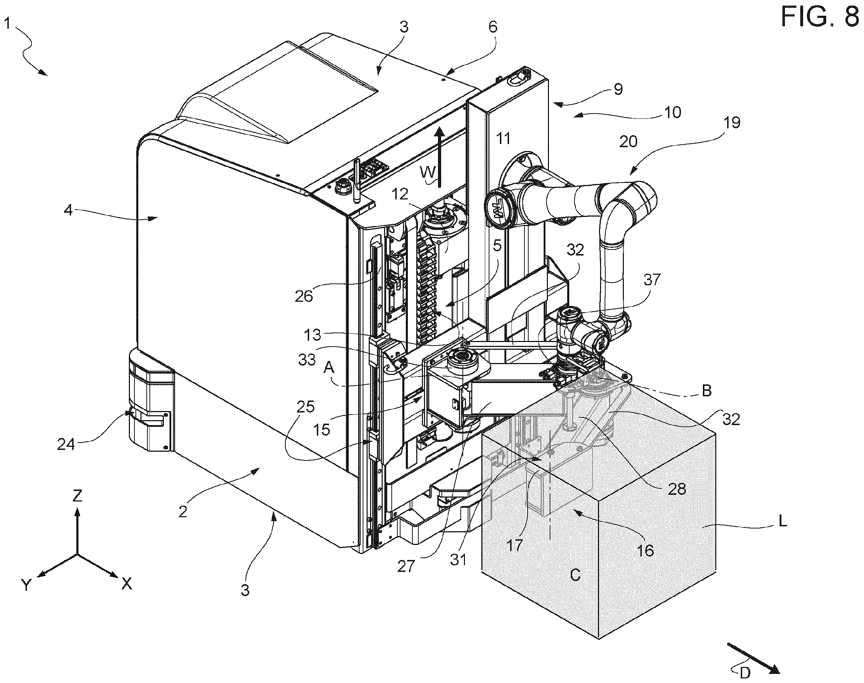

The robotic arm 19 is configured, moving the second distal end 21, to move the link element 17 from a first position (for example illustrated in Figs. 4 to 6) to a second position, which is different from the first position (for example illustrated in Figs. 1-3, 7 and 8).

Advantageously, but without limitation, the vehicle 1 comprises a control circuitry 22 mounted on the base body 2 and configured to autonomously operate at least the lifting system 11 and the robotic arm 19, in particular also to autonomously operate the propulsion system 7 via autonomous driving algorithms. In other words, the vehicle 1 is preferably an AGV.

In particular, the control circuitry 22 comprises at least one electronic control unit ("ECU") 23, for example a PLC or an industrial PC, configured to control at least the motion of the actuator device 12 and of the robotic arm 19, and one or more sensors 24 (of known type, for example optical, such as photocells, video cameras or lasers) to allow the vehicle 1 to move efficiently in the space and reach the desired loads L.

According to the non-limiting embodiment of the accompanying figures, the movable portion 9 comprises a slide 25, which is moved along the lifting direction W by the actuator device 12.

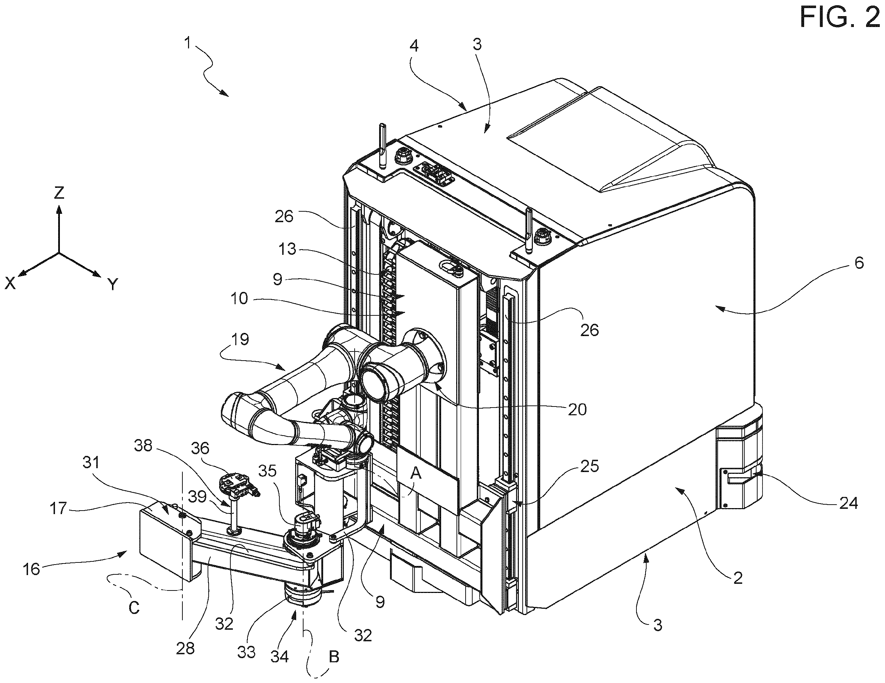

In particular, the slide is slidable on one or more (for example two, as illustrated in Fig. 2) linear guides 26 mounted or made on the base body. In detail, the linear guides 26 are arranged parallel to each other along axes parallel to the lifting direction W and hence to the vertical axis Z.

In some non-limiting cases, as illustrated, for example, in Fig. 1, the articulated structure 14 comprises at least a first arm 27 and a second arm 28. In particular, the first arm 27 is hinged, forming a first joint 29, to the base body 2, so as to rotate about a first axis A of rotation, and, forming a second joint 30, to the second arm 28, so that the first arm 27 and the second arm 28 can rotate relatively about a second axis B of rotation. More in particular, the second arm 28 is further hinged, forming a third joint 31, to the link element 17, so that the second arm 28 and the link element 17 can rotate relatively about a third axis C of rotation.

Advantageously, but without limitation, the first axis A of rotation and the second axis B of rotation are parallel to each other. In particular, the third axis C of rotation is also parallel to the first axis A of rotation and to the second axis B of rotation. In this way, the movement of the articulated structure 14 on the plane PM of movement is guaranteed.

The first joint 29, the second joint 30 and the third joint 31 are preferably configured so as to form a double four bar linkage mechanism 32, and thus to maintain the link element 17 (always) parallel to itself between the first position and the second position. Therefore, in particular, each joint 29, 30, 31 comprises two respective fulcrums that allow the first arm 27, the second arm 28 and the link element 17 to rotate about the respective axes A, B, C of rotation.

Advantageously but without limitation, the first axis A of rotation, the second axis B of rotation and the third axis C of rotation are parallel to each other and vertical. In this way, it is possible to exploit the singularity generated to transfer the full weight of the articulated structure 14 and of the load L, once lifted, to the lifting system 11 and hence to the actuator device 12.

As illustrated in the non-limiting embodiment of Fig. 1, at least one, in particular both, between the first joint 29 and the second joint 30 comprises respective braking devices 33 configured to stop rotation respectively about the first axis A of rotation (of the first arm) and the second axis B of rotation (of the second arm).

In some non-limiting embodiments, not illustrated, if rotation of the link element 17 is not constrained, the third joint 31 also comprises a braking device 33 to stop rotation about the third axis C of rotation.

In some non-limiting cases, in particular when the axes A, B, C are parallel to each other and vertical, the first joint 29, the second joint 30 and the third joint 31 are idle and free to rotate about the respective axes A, B, C under the action of the robotic arm 19. In fact, even if idle, the arrangement of the axes A, B, C allows the joints to mechanically support the weight of the articulated structure 14 and of the load L, being in fact constrained on the plane PM of movement.

Therefore, in these cases the robotic arm 19 is not required to support the weight of the load L, which will fall mainly, in particular completely, on the mechanics of the articulated structure 14. In this way, the robotic arm 19 can be of moderate size and weight, facilitating movement of the vehicle 1.

In other non-limiting cases, at least one between the first joint 29, the second joint 30 and the third joint 31 (if not constrained as described above) comprises a respective actuator device 34 (within the joint, at the joint or with mechanical transfers to avoid worsening the cantilever inertia of the articulated structure 14) to facilitate handling of the articulated structure 14 by the robotic arm 19. In this way, the robotic arm 19 can be made even lighter, also avoiding imparting a force required to overcome the friction of the joints (but a force that is lower than this) .

Preferably, for example, the respective actuator device 34 is controlled by the control unit 23 via a force control (of known type and not further described). In this case, the control circuitry 22 will also comprise a respective force-torque sensor to move the actuator devices 34 as a function of what is detected by it.

In particular, preferably, owing to the versatility, limited weight and safe control for the operators of a plant, the robotic arm 19 is an anthropomorphic robot of the collaborative type, in particular with six or more degrees of freedom. In other words, the arm 19 is a cobot, i.e., a robot conceived to interact physically with humans in a common working space. This type of robots has several known advantages, but at the same time they are conventionally limited in the torque that can be supplied to the joints and hence highly unsuitable for lifting loads L.

Advantageously, but without limitation, at least one between the first joint 29 and the second joint 30, in particular both, comprises a respective measuring device 35 for measuring the angular position of the first arm 27 and of the second arm 28, respectively. In particular, the measuring device is an encoder.

The robotic arm 19 is preferably configured to be coupled (by means of its end effector arranged at the second distal end 21) to the at least part of the articulated structure 14 at a coupling device 36 mounted on the second arm 28 or on the link element 17.

In some non-limiting cases, the robotic arm 19 is coupled in an integral and not automatically removable manner (for example it is mounted or welded) to the coupling device 36.

In other non-limiting cases, such as the one illustrated in the accompanying figures, the robotic arm 19 is also configured to perform other operations (for example in collaboration with an operator, in the case of a cobot) and is removably coupled to the coupling device 36. In particular, the second distal end 21, i.e., the end effector, of the robotic arm 19 comprises a coupling element 37 which is configured to mechanically, pneumatically or magnetically couple to the coupling device 36 mounted on the articulated structure 14.

In this way, the robotic arm 19 can couple to the articulated structure 14 to carry it to a working tool 18 or a load L, so that the entire vehicle 1 does not require to be moved precisely in order to correctly couple or lift a load.

According to the non-limiting embodiment of Fig. 2, the coupling device 36 is connected to the second arm 28 or to the link element 17 via an elongated transfer system 38, in particular a bar 39, projecting from the second arm 28 or from the link element 17, in particular vertically, to facilitate coupling of the second distal end 21 of the robotic arm 19. In particular, the bar 39 projects upwards from the second arm 28.

Advantageously, but without limitation, the articulated structure 14 is configured to support, without the aid of the robotic arm 19, loads of at least 20 kg, in particular of at least 25 kg, in particular of at least 30 kg, preferably of at least 35 kg. In this way, the articulated structure 14 supports the weight of the load L and is positioned precisely by means of the robotic arm, so as to avoid the use of powerful and bulky electric motors. In this way, it is possible to easily and, moreover, automatically lift loads of up to 150 kg or more.

According to some non-limiting embodiments, not illustrated, the articulated structure 14 is mounted on the movable portion 9, while the robotic arm 19 is mounted integral to the rest of the base body 2 and therefore the base of the robotic arm 19 is in a fixed position thereon.

Preferably, the control circuitry 22 is configured to identify a target position of the link element 17, for example via the sensors 24, to couple with a load L or with a tool 18. In particular, the control unit 23 controls the robotic arm 19 to move the articulated structure 14 so as to position the link element 17 or the tool 18 in the target position. After reaching this position, the control unit is configured to control the lifting system 11 to lift the load L or the tool 18. Subsequently, the vehicle 1 is moved by the propulsion system 7 to perform any load L shifting operation.

In use, the control circuitry 22 controls the movement of the vehicle 1 to reach a work, for example loading/unloading, area. In particular, from the work area, the circuitry 22 identifies the target position of the link element 17, via the sensors 24, to couple with the load L or with the desired tool 18 for that specific operation. Subsequently, the control unit 23 controls the robotic arm 19 to move the articulated structure 14 and position the link element 17 or the tool 18 in the target position. After having reached this position, the control unit controls the lifting system 11 to lift the load L or the tool 18. Subsequently, the vehicle 1 is moved by the propulsion system 7 to perform any load L shifting operation. Finally, after having reached a subsequent work area, for example in which the load L is to be unloaded, the control unit 23 controls the robotic arm 19 to move the articulated structure 14 once again and release, by lowering it via the lifting system 11, the load in the desired position. All this is clearly cyclically repeatable via controls of known type, not further described.

Although the invention described above refers in particular to a specific example of embodiment, it must not be considered limited to this example of embodiment, as all those variations, modifications or simplifications covered by the appended claims, such as different types of drives, mechanisms, robotic arms, etc., fall within its scope.

The apparatus, the machine and the method described above offer numerous advantages.

Firstly, an operator no longer requires to alight from or lean out of the vehicle for loading and unloading operations Moreover, the loading and unloading procedures are significantly speeded up, without requiring to manoeuvre the vehicle 1 very precisely in order to couple with the load to be transported.

A further advantage of the present invention lies in the possibility of using collaborative robotic arms, hence of small size and weight for the vehicle, with the possibility of safeguarding any operators who share the working space with said vehicle.

Moreover, the present invention allows a significant reduction in the weight of the vehicle, avoiding the use of robotic arms of large size for direct lifting of loads and the heavy electric motors that would be required; all this exploiting the mechanical singularities of the articulated structure, which allows large weights to be supported stressing only the lifting system, the motor of which is inside the base body.

Finally, it is important to emphasize how the present invention allows a division of roles between robotic arm and articulated structure. The robotic arm, for example a commercial cobot, is not configured to support heavy loads (for example of over 20 kg). Therefore, the use of a robotic arm of this type allows a significant reduction in costs with respect to a robotic arm with higher performance. Also the articulated structure, configured to (autonomously) support the load, is of simple construction and hence not particularly costly. The use of two separate components to perform a movement that could also be performed by a single robotic arm, in actual fact has the surprising effect of considerably reducing the costs of the vehicle according to the present invention.

In other words, the robotic arm moves the articulated structure in the same way as an operator, at the same time allowing the latter to perform any further activities (other than loading/transporting/unloading) in total safety.

### LIST OF REFERENCE NUMBERS IN THE FIGURES

- 1: vehicle
- 2: base body
- 3: opposite bases
- 4: lateral surface
- 5: inner structure
- 6: outer casing
- 7: propulsion system
- 8: wheels
- 9: movable portion
- 10: front face
- 11: lifting system
- 12: actuator device
- 13: chain
- 14: articulated structure
- 15: first proximal end
- 16: first distal end
- 17: link element
- 18: working tool
- 19: robotic arm
- 20: second proximal end
- 21: second distal end
- 22: control circuitry
- 23: control unit
- 24: sensor
- 25: slide
- 26: guide
- 27: first arm
- 28: second arm
- 29: first joint
- 30: second joint
- 31: third joint
- 32: double four bar linkage mechanism
- 33: braking devices
- 34: actuator device
- 35: measuring device
- 36: coupling device
- 37: coupling element
- 38: transfer system
- 39: bar
- L: load
- X: axis
- Y: axis
- Z: axis
- W: lifting direction
- XY: travel plane
- PM: plane of movement
- A: axis of rotation
- B: axis of rotation
- C: axis of rotation
- D: travel direction

## Claims

1. A vehicle (1) for load (L) handling comprising:
- a base body (2)
- a propulsion system (7) mounted on the base body (2) and configured to move the base body (2) in a travel plane (XY) ;
- a movable portion (9) mounted on the base body (2);
- a lifting system (11) comprising at least one actuator device (12), which is configured to move the movable portion (9) along a lifting direction (W) transverse to the travel plane (XY);
the vehicle (1) being **characterized in that** it comprises:
- an articulated structure (14) mounted on the movable portion (9) and constrained to move along a plane (PM) of movement parallel to the travel plane (XY); the articulated structure (14) comprising a first proximal end (15) at the base body (2) and constrained thereto, and a first distal end (16) comprising a link element (17), which is in turn configured to be linked, either directly or via a working tool (18), to a load (L) to be moved
- a robotic arm (19) mounted on the base body (2) at a respective second proximal end (20) and connected or connectable to at least part of the articulated structure (14) at a respective second distal end (21);
the robotic arm (19) being configured, by moving the second distal end (21), to move the link element (17) from a first position to a second position, which is different from the first position.

2. The vehicle (1) according to claim 1 and comprising control circuitry (22) configured to autonomously actuate at least the lifting system (11) and the robotic arm (19), in particular to also autonomously actuate the propulsion system (7) via algorithms for autonomous driving.

3. The vehicle (1) according to any one of the preceding claims, wherein the movable portion (9) comprises a slide (25), which is moved along the lifting direction (W) by the actuator device (12); the slide (25) being slidable on one or more linear guides (26) mounted or made on the base body (2) .

4. The vehicle (1) according to any one of the preceding claims, wherein the articulated structure (14) comprises at least a first arm (27) and a second arm (28), wherein the first arm (27) is hinged, forming a first joint (29), to the base body (2), so as to rotate about a first axis (A) of rotation, and, forming a second joint (30), to the second arm (28), so that the first and second arms (28) can rotate relatively about a second axis (B) of rotation; the second arm (28) being further hinged, forming a third joint (31), to the link element (17), so that the second arm (28) and the link element (17) can rotate relatively about a third axis (C) of rotation.

5. The vehicle (1) according to claim 4, wherein the first axis (A) of rotation and the second axis (B) of rotation are parallel to each other; in particular, the third axis (C) of rotation is also parallel to the first axis (A) of rotation and the second axis (B) of rotation.

6. The vehicle (1) according to claim 4 or 5, wherein the first joint (29), the second joint (30) and the third joint (31) are configured to form a double four bar linkage mechanism (32) and thus to maintain the link element (17) parallel to itself between the first position and the second position.

7. The vehicle (1) according to any one of claims 4 to 6, wherein the first axis (A) of rotation, the second axis (B) of rotation and the third axis (C) of rotation are parallel to each other and vertical.

8. The vehicle (1) according to any one of claims 4 to 7, wherein at least one, in particular all, between the first joint (29) and the second joint (30) comprises a respective braking device (33) configured to stop rotation respectively about the first axis (A) of rotation and the second axis (B) of rotation.

9. The vehicle (1) according to any one of claims 4 to 8, wherein at least one of the first joint (29), the second joint (30) and the third joint (31) comprises a respective actuator device (34) for facilitating the movement of the articulated structure (14) by the robotic arm (19); in particular, the respective actuator device (34) being controlled via a force control.

10. The vehicle (1) according to any one of claims 4 to 8, wherein the first joint (29), the second joint (30) and the third joint (31) are idle and free to rotate about their respective axes under the action of the robotic arm (19).

11. The vehicle (1) according to any one of claims 4 to 10, wherein at least one of the first joint (29) and the second joint (30), in particular both, comprises a respective measuring device (35) for measuring the angular position of the first arm (27) and the second arm (28) respectively.

12. The vehicle (1) according to any one of claims 4 to 11, wherein the robotic arm (19) is configured to be coupled, in particular removably, to the at least part of the articulated structure (14) at a coupling device (36) mounted on board of the second arm (28) or the link element (17).

13. The vehicle (1) according to claim 12, wherein the coupling device (36) is connected to the second arm (28) or to the link element (17) by means of an elongated transfer system (38), in particular a rod (39), projecting from the second arm (28) or the link element (17).

14. The vehicle (1) according to any one of the preceding claims, wherein the robotic arm (19) is an anthropomorphic robot of the collaborative type, in particular with six or more degrees of freedom.

15. The vehicle (1) according to any one of the preceding claims, wherein the articulated structure (14) is configured to support, without the aid of the robotic arm (19), loads (L) of at least 20 kg, in particular of at least 25 kg, in particular of at least 30 kg, preferably of at least 35 kg.
